# EUROPEAN PATENT SPECIFICATION

(11) **EP 3 993 665 B1**
(45) Date of publication and mention of the grant of the patent: **10.04.2024**
(21) Application number: 20740079.7
(22) Date of filing: 02.07.2020
(51) Int. Cl.: A47B 95/00

(54) **MOUNTING APPARATUS**
BEFESTIGUNGSVORRICHTUNG
APPAREIL DE MONTAGE

(30) Priority: 04.07.2019 GB 201909623
(43) Date of publication of application: 11.05.2022
(73) Proprietor: Norcros Group (Holdings) Limited, Andover, Hampshire SP10 5AW (GB)
(72) Inventor: TOOLEY, Jonathan Harry, Andover Hampshire SP10 1HL (GB)
(74) Representative: Murgitroyd & Company
(86) International application number: PCT/GB2020/051585
(87) International publication number: WO 2021/001652

(56) References cited:
- DE-A1- 3 104 541
- GB-A- 2 427 119
- US-A1- 2018 235 366

## Description

### Field of the Invention

This invention relates to an apparatus for mounting furniture on a substantially vertical surface such as a wall. In this context 'furniture' should be interpreted as including (but not necessarily be restricted to) cupboards, shelves, mirrors, and brackets on or with which other components may be mounted or engaged.

### Background to the Invention

In our British Patent GB2427119 we describe and claim apparatus for mounting and levelling furniture on a vertical wall surface. Whilst the arrangement described is simple to use, it is relatively costly to manufacture. Further, the level must be established before the furniture item is placed into position on the wall and the horizontal spacing between the fixings that attach the apparatus to the wall, is substantially fixed. This latter feature limits the positioning of heavier components to walls that require the apparatus to be fixed through the wall and into spaced vertical studs supporting the wall.

The patent DE3104541 A1 discloses a mounting apparatus for mounting an item of furniture against a vertical wall surface, the apparatus including an engagement facility configured to engage an item of furniture to be mounted.

It is an object of the invention to provide apparatus that will go at least some way in addressing the drawbacks mentioned above; or which will at least provide a novel and useful alternative.

### Summary of the Invention

According to the present invention there is a mounting apparatus as defined in claim 1.

Preferably said engagement facility comprises a substantially continuous surface extending substantially parallel to said connection axis.

According to the invention said engagement facility is included in said connecting means.

According to the invention, when mounted in a functioning position, said engagement facility defines or is included in an upper boundary of said apparatus.

Preferably said mounting apparatus further includes end fittings engageable with spaced ends of said connecting means, said end fittings being configured to mount and retain a nail or screw aligned along a fastening axis that is at an acute angle to said surface contact plane.

Preferably said apparatus is configured so that the distance between two fixings can be adjusted between substantially 0 cm and at least 40.64 cm. Preferably said fixings each comprise a rectangular body each comprise a rectangular body on which channels are arranged on opposite edges, each body having a stepped aperture extending centrally therethrough that, in use, receives a correspondingly stepped disc, and wherein the disc includes mounting holes that are offset from the geometric centre of the disc, one of the holes, in use, being configured to, in use, receive a fixing screw.

Many variations in the way the present invention can be performed will present themselves to those skilled in the art. The description which follows describes one or more examples only of combinations of elements or components for performing the invention. Within the limits of the appended claims one, more or all of the described elements could be substituted to provide an embodiment of the invention and the invention is not to be confined to the combinations, whether in whole or in part, to those described.

### Brief Description of the Drawings

One working embodiment of the invention will now be described with reference to the accompanying drawings in which:
- Figure 1:: shows a front elevational view of mounting apparatus according to the invention in a position of use;
- Figure 2:: shows, in a larger scale, a view along the section 2-2 in Figure 1;
- Figure 3:: shows an exploded isometric view of the components comprised in the mounting apparatus shown in Figures 1 & 2; and
- Figure 4:: shows a detailed view of an end fitting comprised in the mounting apparatus.

### Detailed Description of Working Embodiment

As shown in the Figures, furniture mounting apparatus 10 is provided that is not restricted to, but is particularly suited for, mounting an item of furniture (not shown) against a vertical wall surface 11 supported on spaced vertical studs 12. As used herein the term `item of furniture' should be members 20 are preferably identical extrusions that are arranged in mirror fashion. The extrusions have channels 22 which face one another and are configured to receive lugs 23 provided on opposite edges of the fixings 16. The lugs may, as shown, comprise lateral channels which are configured, along with channels 22, so that the fixings 16 can be slidably positioned along a connection axis 25. This is a particular feature of the invention that allows fixings to be positioned relative to one another at any position along connection axis 25, from being in close contact to each being positioned adjacent to an opposite end of the connecting means. It is thus envisaged that the distance between two adjacent fixings could be adjusted from being substantially 0 inches apart (or touching) to at least 16 inches apart. However, these figures should not be regarded as limiting as the lengths of members 20, and the number of fixings, can be set or selected to address any particular mounting requirement. By way of further example, it is preferred that the width of the apparatus be set substantially to the width of the furniture item being supported and thus the width of the apparatus is conveniently set at 48 inches for mounting a bathroom cabinet of 48 inches in width.

The channels 22 and lugs 23 are preferably sized so that, while the lugs can slide within the channels 22 there is a degree of frictional resistance that prevents free or uncontrolled sliding movement.

One of channels 22, preferably that on the lower member 20, may also serve to mount a spirit level holder 26 and the members 20 preferably further include fixing channels 27, each configured and sized to receive the t-shaped head 28 of a unit retainer 29.

The fixings 16 preferably operate in substantially the same manner as described in British patent GB2427119 and comprise a rectangular body 30 on which channels 23 are arranged on opposite edges. Each body 30 has a stepped aperture 31 extending centrally therethrough that, in use, receives a correspondingly stepped disc 32. The disc 32 includes mounting holes 33 that are offset from the geometric centre of the disc, one of the holes 33, in use, receiving a fixing screw 17. As a result, when the disc is pinned in position by a mounting screw 17, rotation of the disc 32 in the aperture 31, about screw 17, creates a cam-like action that, as described below, can be used to adjust the level of the apparatus.

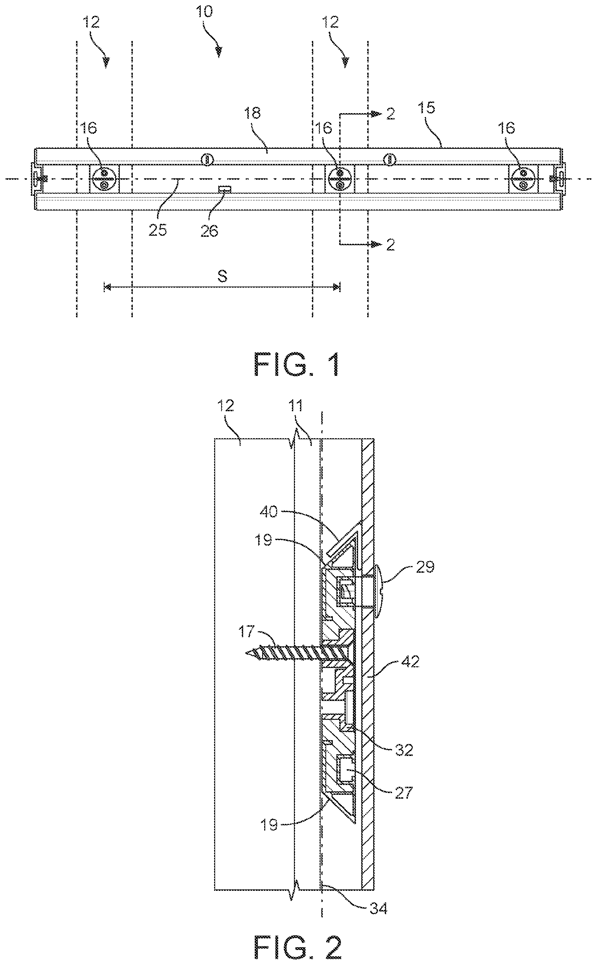

It will be seen from Figure 2 that, when the discs 32 are located in apertures 31 and the fixings 16 are fitted to extrusions 20, the surface parts of all the components on that side on the apparatus that contacts the wall 11 lie in a substantially common surface contact plane 34.

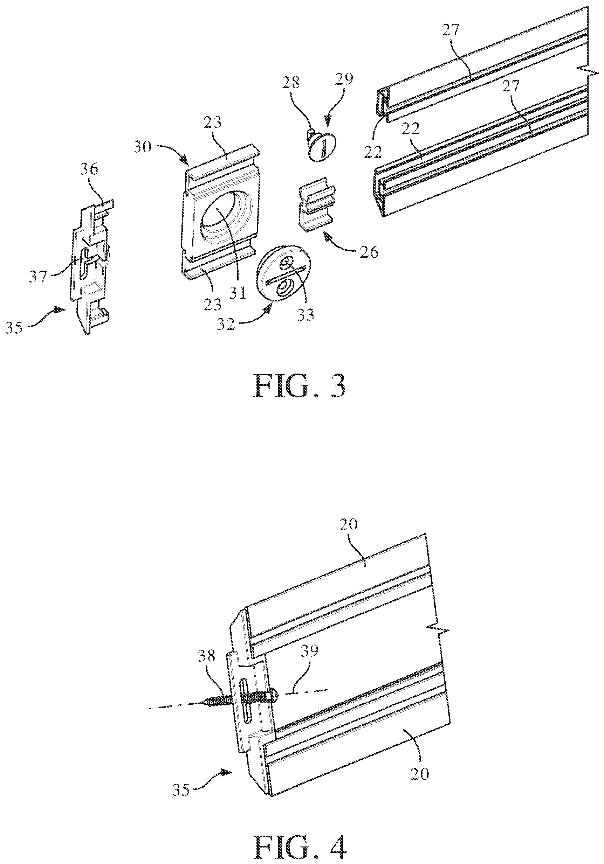

The apparatus 10 may further include one or more end fittings 35 that include end spigots 36 configured to lock into the ends of members 20 as shown in Figure 4. The end fittings are preferably formed with a socket 37 that positions and supports additional end nails or screws 38 while being driven along a fastening axis 39 that is at an acute angle to the surface contact plane 34 but it can be seen that the same end fitting also allows the screws 38 to be applied perpendicular to the plane 34.

The apparatus described above is used in the following matter:
The positions of at least two spaced wall studs 12, to which the furniture unit is to be fixed, are identified and the apparatus 10 is offered up against the wall surface 11 overlying those studs; and in the desired position in which the unit is to be fixed. The relative positions of fixings 16 are then adjusted by sliding one or both fixings within members 20 so that one fixing 16 overlies one stud and another fixing overlies another, horizontally spaced, stud. Using a spirit level retained in holder 26, the apparatus is levelled and the fixings 16 then loosely fastened into position by screws 17. At this stage, the level can again be checked and, if the apparatus has gone out of level in the fixing process, level can again be achieved by rotating one or both of discs 32 within bodies 30. Once level is again established the members 20 may be slid relative to the fixings, to the left or to the right, until the apparatus is located in the desired position. The screws 17 may be driven firmly home and, if desired, further locking screws applied through the additional holes in discs 30.

Supplementary fixings may also be applied using screws passed through end caps 35.

With the mounting apparatus firmly located in the desired position on the wall 11, the furniture unit may be hung thereon. To this end a hanging bracket 40 may be applied to a backboard 42 of the furniture unit and holes may be formed in the backboard so that retainers 29 may be passed through the backboard and turned through 90° until the t-shaped heads 28 lock within channels 27 to securely hold the unit in position.

It will thus be appreciated that the invention, at least in the case of the particular embodiments described, provides effective forms of apparatus that allow persons of limited skill to effectively and accurately mount furniture items on stud walls while offering more skilled people apparatus that can substantially reduce the time required to perform such tasks.

## Claims

1. Mounting apparatus (10) for mounting an item of furniture against a vertical wall surface (11), the apparatus including an engagement facility (15) configured to engage an item of furniture to be mounted; and a plurality of fixings (16), each fixing being configured to receive a fastener (17) whereby the fixings may be fixed to the wall, wherein said apparatus includes connecting means (18) connecting said fixings along a connection axis (25), said connecting means (18) and said fixings (16) being configured such that a fixing can be located with respect to another at substantially any position along said connecting axis (25), wherein said connecting means (18) includes a pair of spaced, facing, channels (22) extending in the direction of said connection axis, and wherein at least one of said fixings (16) includes lugs (23) engageable within said channels (22), said channels and said lugs being configured so that said at least one of said fixings (16) is retained within but is slidable along said channels (22), wherein when mounted in a functional position, said engagement facility (15) defines or is included in an upper boundary of said connecting means (18), wherein a surface of each of said fixings (16) and a surface of said connecting means (18) lie in a substantially common surface contact plane (34), for contacting the vertical wall surface.

2. Mounting apparatus (1) as claimed in claim 1 wherein said engagement facility (15) comprises a substantially continuous surface of said connecting means extending substantially parallel to said connection axis (25).

3. Mounting apparatus (10) as claimed in claim 1 further including end fittings (35) engageable with spaced ends of said connecting means (18), said end fittings being configured to mount and retain a nail or screw (38) aligned along a fastening axis (39) that is at an acute angle to said surface contact plane (34).

4. Mounting apparatus (10) as claimed in any one of the preceding claims wherein said apparatus is configured so that the distance between two fixings (16) can be adjusted between substantially 0 cm and at least 40.64cm.

5. Mounting apparatus (10) as claimed in any one of the preceding claims wherein said fixings (16) each comprise a rectangular body (30) on which channels (23) are arranged on opposite edges, each body (30) having a stepped aperture (31) extending centrally therethrough that, in use, receives a correspondingly stepped disc (32), and wherein the disc (32) includes mounting holes (33) that are offset from the geometric centre of the disc, one of the holes (33), in use, being configured to, in use, receive a fixing screw (17).

## Patentansprüche

1. Befestigungsvorrichtung (10) zum Befestigen eines Möbelgegenstands an einer vertikalen Wandoberfläche (11), wobei die Vorrichtung Folgendes umfasst: eine Eingriffseinrichtung (15), die konfiguriert ist, um in einen Möbelgegenstand einzugreifen, der befestigt werden soll; und eine Vielzahl von Fixierungen (16), wobei jede Fixierung konfiguriert ist, um ein Halterelement (17) aufzunehmen, wodurch die Fixierungen an der Wand fixiert werden können, wobei die Vorrichtung Verbindungsmittel (18) umfasst, die die Fixierungen entlang einer Verbindungsachse (25) verbinden, wobei die Verbindungsmittel (18) und die Fixierungen (16) so konfiguriert sind, dass eine Fixierung mit Bezug auf eine andere an im Wesentlichen jeder beliebigen Position entlang der Verbindungsachse (25) lokalisiert werden kann, wobei die Verbindungsmittel (18) ein Paar von mit Abstand angeordneten, zugewandten Kanälen (22) umfassen, die sich in Richtung der Verbindungsachse erstrecken, und wobei mindestens eine der Fixierungen (16) Laschen (23) umfasst, die innerhalb der Kanäle (22) in Eingriff gebracht werden können, wobei die Kanäle und die Laschen so konfiguriert sind, dass die mindestens eine der Fixierungen (16) innerhalb der Kanäle (22) gehalten wird, aber entlang diesen gleitbar ist, wobei, wenn in einer funktionalen Position befestigt, die Eingriffseinrichtung (15) eine obere Grenze der Verbindungsmittel (18) definiert oder in dieser eingeschlossen ist, wobei eine Oberfläche jeder der Fixierungen (16) und eine Oberfläche der Verbindungsmittel (18) in einer im Wesentlichen gemeinsamen Oberflächenkontaktebene (34) liegen, um die vertikale Wandoberfläche zu kontaktieren.

2. Befestigungsvorrichtung (1) gemäß Anspruch 1, wobei die Eingriffseinrichtung (15) eine im Wesentlichen kontinuierliche Oberfläche der Verbindungsmittel beinhaltet, die sich im Wesentlichen parallel zu der Verbindungsachse (25) erstreckt.

3. Befestigungsvorrichtung (10) gemäß Anspruch 1, die ferner Endstücke (35) umfasst, die mit mit Abstand angeordneten Enden der Verbindungsmittel (18) in Eingriff gebracht werden können, wobei die Endstücke konfiguriert sind, um einen Nagel oder eine Schraube (38) zu befestigen oder zu halten, der/die entlang einer Halteachse (39) ausgerichtet ist, die sich in einem spitzen Winkel zu der Oberflächenkontaktebene (34) befindet.

4. Befestigungsvorrichtung (10) gemäß einem der vorhergehenden Ansprüche, wobei die Vorrichtung so konfiguriert ist, dass der Abstand zwischen den zwei Fixierungen (16) zwischen im Wesentlichen 0 cm und mindestens 40,64 cm eingestellt werden kann.

5. Befestigungsvorrichtung (10) gemäß einem der vorhergehenden Ansprüche, wobei die Fixierungen (16) jeweils einen rechteckigen Körper (30) beinhalten, an dem Kanäle (23) auf entgegengesetzten Kanten eingerichtet sind, wobei jeder Körper (30) einen gestuften Durchlass (31) aufweist, der sich zentral dort hindurch erstreckt, und bei Verwendung eine entsprechend gestufte Scheibe (32) aufnimmt, und wobei die Scheibe (32) Befestigungslöcher (33) umfasst, die von der geometrischen Mitte der Scheibe versetzt sind, wobei eines der Löcher (33) bei Verwendung konfiguriert ist, um eine Fixierungsschraube (17) aufzunehmen.

## Revendications

1. Appareil de montage (10) destiné à monter un meuble contre une surface murale (11) verticale, l'appareil incluant une installation d'entrée en prise (15) configurée pour entrer en prise avec un meuble devant être monté ; et une pluralité de fixations (16), chaque fixation étant configurée pour recevoir un élément d'attache (17) par lequel les fixations peuvent être fixées au mur, où ledit appareil inclut un moyen de raccordement (18) raccordant lesdites fixations le long d'un axe de raccordement (25), ledit moyen de raccordement (18) et lesdites fixations (16) étant configurés de telle sorte qu'une fixation puisse être située par rapport à une autre à substantiellement n'importe quelle position le long dudit axe de raccordement (25), où ledit moyen de raccordement (18) inclut une paire de canaux (22) espacés l'un de l'autre, se faisant face, s'étendant dans la direction dudit axe de raccordement, et où au moins une desdites fixations (16) inclut des tenons (23) pouvant entrer en prise à l'intérieur desdits canaux (22), lesdits canaux et lesdits tenons étant configurés de sorte que ladite au moins une desdites fixations (16) soit retenue à l'intérieur desdits canaux (22) mais puisse coulisser le long de ceux-ci, où lorsqu'elle est montée dans une position fonctionnelle, ladite installation d'entrée en prise (15) définit ou est incluse dans une limite supérieure dudit moyen de raccordement (18), où une surface de chacune desdites fixations (16) et une surface dudit moyen de raccordement (18) reposent dans un plan de contact (34) avec la surface substantiellement commun, pour entrer en contact avec la surface murale verticale.

2. Appareil de montage (1) tel que revendiqué dans la revendication 1 où ladite installation d'entrée en prise (15) comprend une surface substantiellement continue dudit moyen de raccordement s'étendant de façon substantiellement parallèle audit axe de raccordement (25).

3. Appareil de montage (10) tel que revendiqué dans la revendication 1 incluant en outre des pièces d'extrémité (35) pouvant entrer en prise avec des extrémités espacées dudit moyen de raccordement (18), lesdites pièces d'extrémité étant configurées pour monter et retenir un clou ou une vis (38) aligné(e) le long d'un axe d'attache (39) qui est à un angle aigu par rapport audit plan de contact (34) avec la surface.

4. Appareil de montage (10) tel que revendiqué dans n'importe laquelle des revendications précédentes où ledit appareil est configuré de sorte que la distance entre deux fixations (16) puisse être ajustée entre substantiellement 0 cm et au moins 40,64 cm.

5. Appareil de montage (10) tel que revendiqué dans n'importe laquelle des revendications précédentes où lesdites fixations (16) comprennent chacune un corps (30) rectangulaire sur lequel des canaux (23) sont agencés sur des bords opposés, chaque corps (30) ayant une ouverture (31) étagée s'étendant centralement à travers celui-ci qui, lors de l'utilisation, reçoit un disque (32) étagé de façon correspondante, et où le disque (32) inclut des trous (33) de montage qui sont décalés du centre géométrique du disque, un des trous (33), lors de l'utilisation, étant configuré pour, lors de l'utilisation, recevoir une vis (17) de fixation.
